# EUROPÄISCHE PATENTSCHRIFT

(11) **EP 3 519 210 B1**
(45) Veröffentlichungstag und Bekanntmachung des Hinweises auf die Patenterteilung: **27.01.2021**
(21) Anmeldenummer: 17737755.3
(22) Anmeldetag: 03.07.2017
(51) Int. Cl.: B60C 13/00, B60C 13/02

(54) **FAHRZEUGREIFEN**
VEHICLE TIRES
PNEUMATIQUE DE VÉHICULE

(30) Priorität: 27.09.2016 DE 102016218487
(43) Veröffentlichungstag der Anmeldung: 07.08.2019
(73) Patentinhaber: Continental Reifen Deutschland GmbH, 30165 Hannover (DE)
(72) Erfinder: RITTWEGER, Stefan, 30826 Garbsen (DE)
(74) Vertreter: Finger, Karsten
(86) Internationale Anmeldenummer: PCT/EP2017/066413
(87) Internationale Veröffentlichungsnummer: WO 2018/059758

(56) Entgegenhaltungen:
- EP-A1- 2 502 758
- JP-A- 2006 224 704
- JP-A- 2012 061 971
- JP-A- 2016 002 936
- JP-A- 2016 002 937
- US-A1- 2006 254 689

## Beschreibung

Die Erfindung betrifft einen Fahrzeugreifen mit einer Seitenwand mit zumindest einem Seitenwanddekor, welches sich zumindest über einen Umfangsabschnitt der Seitenwand erstreckt, wobei das Seitenwanddekor Dekorflächen aus ersten und zweiten oberflächlich strukturierten Flächenelementen aufweist, wobei die ersten oberflächlich strukturierten Flächenelemente Licht geringer absorbieren als die zweiten oberflächlich strukturierten Flächenelemente.

Seitenwanddekors als gestalterische Maßnahmen auf Seitenwänden von Fahrzeugreifen sind schon lange bekannt und weit verbreitet. Sie sind auch immer wieder Gegenstand von Patentanmeldungen und Patenten. Ein Fahrzeugreifen der eingangs genannten Art ist beispielsweise aus der DE 10 2013 108 786 A1 bekannt. Bei diesem Fahrzeugreifen besteht das Seitenwanddekor aus Schraffurflächen, wobei eine Basisschraffur aus einer Vielzahl von nebeneinander, insbesondere parallel zueinander, verlaufenden Erhebungen vorgesehen ist, welche aus der Basisschraffur unter übereinstimmend großen Winkeln abgelenkte Abschnitte aufweisen, sodass derart örtlich begrenzte Schraffurflächen gebildet sind, in welchen die Erhebungen unter einem von den Erhebungen in der Basisschraffur abweichenden Winkel verlaufen. Diese abgelenkten Abschnitte können durch nochmaliges, unter übereinstimmend großen Winkeln erfolgtes Ablenken in zumindest eine weitere Schraffurfläche übergehen. Auf diese Weise können Schraffurflächen gebildet werden, die die Mantelflächen geometrischer Körper, beispielsweise Pyramidenflächen, simulieren bzw. darstellen. Aus der WO 2015 078881 A1 ist es ferner zur Kaschierung von Unebenheiten auf der Seitenwand bekannt, ein Muster aus kleindimensionierten, kugelabschnittsförmigen Erhebungen auf der Seitenwand auszubilden. Aus der WO 2015 078882 A1 ist es bekannt, ein derartiges Muster aus kugelabschnittsförmig gestalteten Vertiefungen auszubilden. Ferner ist es aus der JP 2016 002 936 A bekannt, beispielsweise mittels Tampondruck (PAD printing) ein Seitenwanddekor mit einer beispielsweise T-förmigen Dekorfläche zu erzeugen, wobei die Dekorfläche Flächenelemente aufweist, welche unterschiedlich koloriert sind und Licht unterschiedlich stark absorbieren.

Der Erfindung liegt die Aufgabe zugrunde, ein Seitenwanddekor der eingangs genannten Art derart zu gestalten, dass es eine ausgeprägte Tiefenwirkung erzeugt und sich besonders dafür eignet, größere kreisringförmige Abschnitte in Seitenwänden zu bedecken, um derart auch besonders gut etwaige Unebenheiten in Seitenwänden zu kaschieren.

Gelöst wird die gestellte Aufgabe erfindungsgemäß dadurch, dass das Seitenwanddekor aus den Dekorflächen und einem netzartigen Muster aus glatten Flächenelementen, welche die Dekorflächen umlaufen bzw. begrenzen, gebildet ist, wobei die zweiten oberflächlich strukturierten Flächenelemente der Dekorflächen zumindest im Wesentlichen einen Schatten bzw. eine Kopie des netzartigen Musters oder eines Teiles des netzartigen Musters, in Umfangsrichtung und in radialer Richtung gegenüber dem Muster geringfügig versetzt, wiedergeben, wobei jeweils die übrige oberflächlich strukturierte Fläche der Dekorflächen von einem oder mehreren ersten oberflächlich strukturierten Flächenelement(en) gebildet ist.

Gemäß der Erfindung erscheinen daher die Dekorflächen des Seitenwanddekors gegenüber den glatten netzartig verlaufenden Flächenelementen als in die Tiefe der Seitenwand hinein versetzt. Die Erfindung ermöglicht es daher, eine ausgeprägte Tiefenwirkung von Seitenwanddekors zu erzeugen, die sich daher besonders gut dafür eignet, relativ große Flächenbereiche von Seitenwänden ausgesprochen dekorativ zu gestalten und etwaige Unebenheiten in den Seitenwänden zu kaschieren.

Von besonderer Bedeutung ist, dass, wie eingangs erwähnt, die zweiten Flächenelemente Licht wesentlich stärker absorbieren als die ersten Flächenelemente. Darüber hinaus lässt sich die Tiefenwirkung vor allem mit einheitlich gestalteten Seitenwanddekors erzielen. Einheitlich gestaltet bedeutet hierbei, dass die ersten und die zweiten oberflächlich strukturierten Flächenelemente innerhalb eines sich über einen Umfangsabschnitt der Seitenwand erstreckenden Seitenwanddekors den gleichen Typ Oberflächenstruktur aufweisen. Würde die Struktur variiert werden, würde die Tiefenwirkung leiden. Es gibt eine Vielzahl von Möglichkeiten solche Oberflächenstrukturen auszugestalten. Bei einer möglichen Ausführungsvariante der Erfindung ist die Oberflächenstruktur der ersten und der zweiten Flächenelemente die Oberflächenrauheit.

Es eignen sich jedoch auch etwas größere dreidimensionale Strukturen als Oberflächenstruktur. Bei einer weiteren Ausführungsvariante der Erfindung ist die Oberflächenstruktur der ersten und der zweiten Flächenelemente von einer Vielzahl im Wesentlichen punktueller dreidimensionaler Elemente gebildet. Unter punktuell ist dabei zu verstehen, dass es sich beispielsweise um eine Vielzahl von in Draufsicht kreisförmigen Erhebungen oder Vertiefungen handelt, die an der Oberfläche in entsprechend kleinen Dimensionen ausgebildet sind, wobei sowohl die Dimensionierung solcher Erhebungen oder Vertiefungen als auch die gegenseitigen Abstände unterschiedliche Lichtabsorptionsgrade ergeben. Solche Erhebungen und Vertiefungen weisen beispielsweise Durchmesser von 0,1 mm bis 0,6 mm und gegenüber ihrer Basis bzw., ihrem äußeren Rand eine Höhe von 0,1 mm bis 0,8 mm auf.

Bei einer noch weiteren und besonders bevorzugten Ausführungsvariante der Erfindung ist die Oberflächenstruktur der ersten und der zweiten Flächenelemente von Schraffurflächen aus einer Vielzahl von insbesondere parallel zueinander verlaufenden Erhebungen gebildet. Solche Erhebungen sind vorzugsweise im Querschnitt im Wesentlichen dreieckig oder trapezförmig.

Die Tiefenwirkung von Schraffurflächen als Oberflächenstruktur lässt sich durch eine Anzahl von Maßnahmen beeinflussen bzw. verstärken, vorzugsweise indem sich die Erhebungen in den zweiten Flächenelementen von den Erhebungen in den ersten Flächenelementen durch zumindest eines der nachfolgenden Merkmale unterscheiden:
- die Höhe der Erhebungen in den zweiten Flächenelementen ist größer als jene der Erhebungen in den ersten Flächenelementen,
- die Dichte der Erhebungen in den zweiten Flächenelementen ist größer als jene der Erhebungen in den ersten Flächenelementen,
- die Erhebungen in den zweiten Flächenelementen weisen Seitenflanken auf, die zu einer Senkrechten auf die Seitenwand unter einem kleineren Winkel verlaufen als die Seitenflanken der Erhebungen in den ersten Flächenelementen.

Der Winkel der Seitenflanken der Erhebungen in den beiden Flächenelementen kann besonders gut die Tiefenwirkung beeinflussen. In diesem Zusammenhang ist es besonders vorteilhaft, wenn der Winkel der Seitenflanken der Erhebungen in den zweiten Flächenelementen relativ zur Senkrechten auf die Seitenwand um mindestens 10° kleiner ist als der Winkel der Seitenflanken der Erhebungen in den ersten Flächenelementen. Besonders dunkel erscheint der Schatten bzw. die Kopie des netzartigen Musters innerhalb der Dekorflächen, wenn der Winkel der Seitenflanken der Erhebungen relativ zur Senkrechten auf die Seitenwand in den zweiten Flächenelementen 15° bis 30° beträgt und wenn der Winkel der Seitenflanken der Erhebungen relativ zur Senkrechten auf die Seitenwand in den ersten Flächenelementen 35° bis 50° beträgt.

Die Tiefenwirkung wird daher auch vom Kontrast zwischen den oberflächlichen Strukturen in den ersten und zweiten Flächenelementen beeinflusst. In diesem Zusammenhang ist es ferner auch von Vorteil, wenn die Höhe der Erhebungen in den zweiten Flächenelementen um mindestens 0,1 mm größer ist als die Höhe der Erhebungen in den ersten Flächenelementen. Eine weitere diesbezügliche Maßnahme sieht vor, dass die Erhebungen in den zweiten Flächenelementen an ihrer Basis entweder unmittelbar aneinander anschließen oder einen gegenseitigen Abstand von bis zu 0,3 mm aufweisen. Auch die Erhebungen in den ersten Flächenelementen können an ihrer Basis unmittelbar aneinander anschließen, weisen jedoch bevorzugt einen gegenseitigen Abstand auf, der größer ist als der gegenseitige Abstand der Erhebungen in den zweiten Flächenelementen und bis zu 0,5 mm beträgt.

Zu den die Tiefenwirkung beeinflussenden Faktoren gehört auch die Höhe der Erhebungen in den Flächenelementen. Vorteilhaft ist es, wenn die Erhebungen in den zweiten Flächenelementen eine Höhe von maximal 0,8 mm und wenn die Erhebungen in den ersten Flächenelementen eine Höhe von 0,15 mm bis 0,6 mm aufweisen.

Der Kontrast zwischen den ersten und den zweiten Flächenelementen wird auch durch den Winkel zwischen den Erstreckungsrichtungen der Erhebungen in den ersten und den zweiten Flächenelementen beeinflusst. Bevorzugt sollte innerhalb einer Dekorfläche dieser Winkel 45° bis 135°, insbesondere in der Größenordnung von 90°, betragen.

Weitere Merkmale, Vorteile und Einzelheiten der Erfindung werden nun anhand der Zeichnung, die Ausführungsbeispiele darstellt, näher beschrieben. Dabei zeigen
Fig. 1 einen Umfangsabschnitt einer Seitenwand eines Fahrzeugreifens mit einer Ausführungsvariante der Erfindung,
Fig. 2 eine schematische Ansicht eines Umfangsabschnittes einer Seitenwand eines Fahrzeugreifens mit einer weiteren Ausführungsvariante der Erfindung und
Fig. 3 einen Schnitt entlang der Linie III-III der Fig. 1.

Auf den Seitenwänden von Fahrzeugreifen sind üblicherweise die vorgeschriebenen Angaben, wie die Reifendimension, der Speedindex, der Hersteller, die Reifenbezeichnung, der Verwendungszweck (Sommer-/Winterreifen) und dergleichen angegeben. Diese Angaben befinden sich meist auf glatten Flächenbereichen der Seitenwände. Es verbleibt einiges an freier Fläche auf den Seitenwänden, auf welchen meist Schraffuren angebracht sind, die einen Kontrast zu den glatten Flächenbereichen der Seitenwände bilden und auch in der Lage sind, etwaige konstruktionsbedingte Unebenheiten auf den Seitenwänden zu kaschieren. Als Schraffuren werden im Allgemeinen Gestaltungselemente auf der Seitenwand von Reifen bezeichnet, die sich jeweils aus einer Vielzahl von insbesondere parallel zueinander verlaufenden Erhebungen zusammensetzen. Anstelle von Schraffuren können Oberflächenreliefe, beispielsweise aus einer Vielzahl sehr kleiner quasi punktuell ausgebildeter, die Teilbereiche der Dekorflächen oder die Dekorflächen bedeckender Vertiefungen oder Erhebungen auf den Seitenwänden ausgebildet sein.

In der nachfolgenden Beschreibung und in den Patentansprüchen bezeichnet der Begriff "oberflächlich strukturiertes Flächenelement" eine Teilfläche innerhalb einer Dekorfläche mit jeder Art von dreidimensionalen Gestaltungselementen, wie Schraffuren, Oberflächenreliefen, Rauheit und dergleichen.

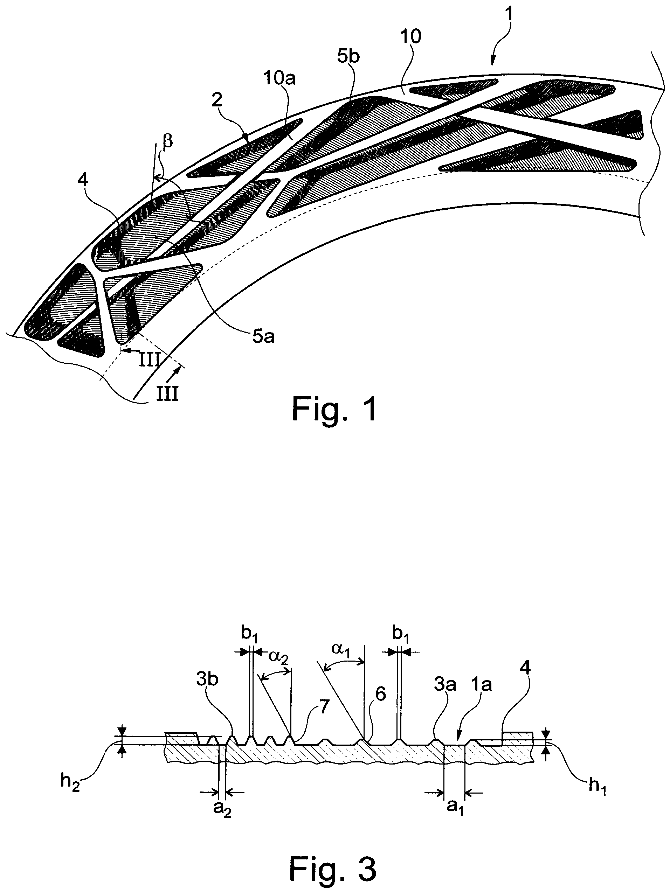

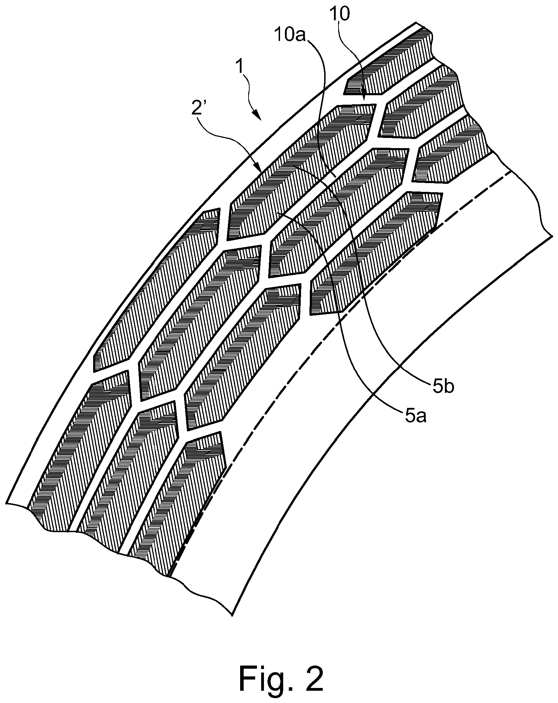

Bei den Ausführungsbeispielen in Fig. 1 und Fig. 2 gehören zu den Gestaltungselementen auf einer Seitenwand 1 glatte Flächenelemente 10 und Dekorflächen 2, 2', welche sich gegenüber den glatten Flächenelementen 10 in seichten Vertiefungen 1a, die in der Seitenwand 1 ausgebildet sind, befinden. Die glatten Flächenelemente 10 bilden ein Muster aus netzartig verlaufenden schmalen, beispielsweise 2,0 mm bis 10,0 mm breiten Stegen, welche die Dekorflächen 2, 2' umlaufen und/oder begrenzen. Die Vertiefungen 1a sind am Niveau der glatten Flächenelemente 10 von Kanten 4 umlaufen bzw. begrenzt, die den Dekorflächen 2, 2' ihre äußere Gestalt verleihen. Jede Dekorfläche 2, 2' weist zumindest ein erstes oberflächlich strukturiertes Flächenelement 5a und zumindest ein zweites oberflächlich strukturiertes Flächenelement 5b auf. Die oberflächlich strukturierten Flächenelemente 5a und die oberflächlich strukturierten Flächenelemente 5b sind innerhalb eines sich über einen Umfangsabschnitt, insbesondere in Kreisringsegmentform, der Seitenwand 1 erstreckenden Dekorbereiches jeweils übereinstimmend strukturiert. Die Flächenelemente 5b sind jedoch derart strukturiert, dass sie wesentlich mehr Licht absorbieren als die Flächenelemente 5a.

Bei der in Fig. 1 gezeigten Ausführungsform bilden die glatten Flächenelemente 10 eine Speichen- oder Netzstruktur mit einer Vielzahl einander kreuzenden langgestreckten Stegen 10a, wobei auch die glatten äußeren Ränder des Dekorbereiches zum Netz gehören. Entsprechend der Netzgestaltung weisen die Dekorflächen 2 unterschiedliche äußere Gestalt auf.

Zur Erzielung eines "2-Ebenen"-Effektes des Dekorbereiches geben die oberflächlich strukturierten Flächenbereiche 5b innerhalb der Dekorflächen 2 eine "Kopie" bzw. einen Schatten der glatten Flächenelemente 10, hier der Netz- bzw. Speichenstruktur, wieder. Diese Kopie bzw. dieser Schatten ist in Umfangsrichtung der Seitenwand 1 und auch in axialer Richtung gegenüber dem Netz aus Flächenelementen 10 versetzt. In Fig. 1 sind vom radial äußeren glatten Rand und von dem in der Figur linken glatten Rand des Dekorbereiches in den anschließenden Dekorflächen 2 "Schatten" als Flächenelemente 5b wiedergegeben. Die Flächenelemente 5a nehmen die verbleibenden Flächenteile der Dekorflächen 2 ein. Da die Flächenelemente 5b deutlich weniger Licht reflektieren als die Flächenelemente 5a erscheinen die Dekorflächen 2 als gegenüber den glatten Flächenelementen 10 der Netz- bzw. Speichenstruktur in die Tiefe, in die Seitenwand 1 hineinversetzt.

Bei der in Fig. 2 gezeigten Ausführungsform bilden die glatten Flächenelemente 10 als schmale Stege eine Art Wabenstruktur mit sich entlang der Seitenwand 1 in Umfangsrichtung erstreckenden gleich großen und in Umfangsrichtung der Seitenwand 1 langgestreckten Waben als Dekorflächen 2'. Die glatten Flächenelemente 10 sind etwa 2,0 mm bis 4,0 mm breite Umrandungen der Dekorflächen 2'. Ein derartig gestalteter Dekorbereich weist beispielsweise jeweils zumindest zwei komplette Waben in der radialen Erstreckung des Dekorbereiches auf. Die Umrandungen der wabenförmigen Dekorflächen 2' bildenden glatten Flächenelemente 10 finden sich in den Dekorflächen 2' in Umfangsrichtung und in radialer Richtung versetzt als Flächenelemente 5b wieder. Die wesentlich mehr Licht reflektierenden Flächenelemente 5a nehmen die restlichen Bereiche der Dekorflächen 2' ein. Auch bei dieser Ausführungsform erscheinen daher die Dekorflächen 2' als gegenüber den glatten Wabenumrandungen in die Tiefe versetzt.

Bei den in Fig. 1 und Fig. 2 gezeigten Ausführungsvarianten sind die Dekorflächen 2, 2' aus Schraffuren gebildet, die sich in den seichten, vorzugsweise 0,4 mm bis 0,8 mm tiefen Vertiefungen 1a (Fig. 3) der Seitenwand 1 befinden. Sowohl die ersten Flächenelemente 5a als auch die zweiten Flächenelemente 5b sind jeweils von parallel zueinander verlaufenden Erhebungen 3a bzw. 3b gebildet.

Die Schnittdarstellung in Fig. 3 zeigt einen Schnitt von Flächenelementen 5a, 5b in einer der Dekorflächen 2, jeweils im rechten Winkel zur Erstreckungsrichtung der Erhebungen 3a und 3b. Sämtliche Erhebungen 3a und sämtliche Erhebungen 3b sind innerhalb ihrer Flächenelemente 5a, 5b jeweils gleich ausgebildet. Die Erhebungen 3a, 3b erstrecken sich von dem im Wesentlichen ebenen Boden der Vertiefung 1a ausgehend senkrecht nach außen und sind im Querschnitt im Wesentlichen gleichschenkelige Dreiecke mit einer abgeflachten Spitze, welche eine Breite b₁ in der Größenordnung von 0,1 mm aufweist. Die Erhebungen 3a weisen eine Höhe h₁ von 0,15 mm bis 0,6 mm, vorzugsweise bis 0,3 mm, auf und sind mit seitlichen Flankenflächen 6 versehen, die zur Senkrechten auf die Seitenwand 1 unter übereinstimmend großen Winkeln α₁ von 35° bis 50°, insbesondere von 45°, verlaufen. Die Erhebungen 3a können an ihrer Basis am Boden der Vertiefungen 1a unmittelbar aneinander anschließen, bei der gezeigten Ausführungsform weisen sie an ihrer Basis einen gegenseitigen Abstand a₁ auf, welcher 0,1 mm bis 0,5 mm betragen kann.

Die Erhebungen 3b weisen eine Höhe h₂ auf, welche insbesondere bis zu 0,8 mm beträgt und um mindestens 0,1 mm größer ist als die Höhe h₁ der Erhebungen 3a. Am Boden der Vertiefungen 1a können die Erhebungen 3b unmittelbar aneinander anschließen oder einen gegenseitigen Abstand a₂ aufweisen, der bis zu 0,3 mm beträgt und vorzugsweise um mindestens 0,1 mm geringer ist als der gegenseitige Abstand a₁ der Erhebungen 3a, wenn diese unter einem Abstand a₁ von mindestens 0,2 mm zueinander angeordnet sind. Die Erhebungen 3b weisen Seitenflanken 7 auf, welche unter gleich großen Winkeln α₂ zu einer Senkrechten auf die Seitenwand 1 verlaufen, welcher 15° bis 35° beträgt und um mindestens 10°, insbesondere um mindestens 20°, kleiner ist als der Winkel α₁ der Seitenflanken 6 der Erhebungen 3a.

In den Flächenelementen 5b sind daher die Erhebungen 3b mit einer größeren Dichte, angeordnet als die Erhebungen 3a in den Flächenelementen 5a. Die Dichte der Erhebungen 3b in den Flächenelementen 5b beträgt insbesondere das 0, 7- bis 3-Fache, vorzugsweise etwa das Doppelte der Dichte der Erhebungen 3a in den Flächenelementen 5a.

Die Erhebungen 3b können eine Höhe h₂ aufweisen, die der Tiefe der Vertiefungen 1a entspricht, sodass sich die höchsten Stellen der Erhebungen 3b auf dem Niveau der Kanten 4 und demnach niveaugleich mit den an die Dekorflächen 2, 2' anschließenden glatten Flächenbereichen der Seitenwand 1 befinden.

Innerhalb der Dekorflächen 2, 2' eines Dekorbereiches verlaufen die Erhebungen 3a in sämtlichen Flächenelementen 5a zu den Erhebungen 3b in sämtlichen Flächenelementen 5b unter einem konstanten Winkel β von 45° bis 135°, bevorzugt von etwa 90°, zueinander. An Stelle von aus Erhebungen bestehenden Schraffuren können die Dekorflächen auf den Seitenwänden 1, wie oben erwähnt, als Oberflächenreliefe ausgestaltet sein, die unterschiedliche Reflexionseigenschaften aufweisen. Die Flächenelemente können ferner mit unterschiedlicher Rauheit ausgeführt sein, um derart unterschiedliche Reflexionseigenschaften zu besitzen.

Zur Herstellung der oberflächlich strukturierten Flächenelemente, der Oberflächenreliefe oder Rauheiten auf solchen Flächenelementen in Seitenwänden von Fahrzeugreifen werden die Seitenwandschalen der den Rohreifen vulkanisierenden Vulkanisationsformen entsprechend gefräst oder graviert. Insbesondere ein Gravieren mittels Laser gestattet es, sehr feine und klein dimensionierte Strukturen in den Seitenwandschalen herzustellen, die während der Vulkanisation entsprechend ausgestaltete Flächenelemente in die Seitenwände des Reifens einprägen.

### Bezugsziffernliste

- 1: Seitenwand
- 1a: Vertiefung
- 2, 2': Dekorfläche
- 3a, 3b: Erhebung
- 4: Kante
- 5a, 5b: oberflächlich strukturiertes Flächenelement
- 6, 7: Seitenflanke
- α₁, α₂, β: Winkel
- a₁, a₂: Abstand
- b₁: Breite
- h₁, h₂: Höhe
- 10, 10a: glattes Flächenelement

## Patentansprüche

1. Fahrzeugreifen mit einer Seitenwand (1) mit zumindest einem Seitenwanddekor, welches sich zumindest über einen Umfangsabschnitt der Seitenwand (1) erstreckt, wobei das Seitenwanddekor Dekorflächen (2, 2') aus ersten und zweiten oberflächlich strukturierten Flächenelementen (5a, 5b) aufweist, wobei die ersten oberflächlich strukturierten Flächenelemente (5a) Licht geringer absorbieren als die zweiten oberflächlich strukturierten Flächenelemente (5b),
**dadurch gekennzeichnet,**
**dass** das Seitenwanddekor aus den Dekorflächen (2, 2') und einem netzartigen Muster aus glatten Flächenelementen (10, 10a), welche die Dekorflächen (2, 2') umlaufen bzw. begrenzen, gebildet ist,
wobei die zweiten oberflächlich strukturierten Flächenelemente (5b) der Dekorflächen (2, 2') zumindest im Wesentlichen einen Schatten bzw. eine Kopie des netzartigen Musters oder eines Teiles des netzartigen Musters, in Umfangsrichtung und in radialer Richtung gegenüber dem Muster geringfügig versetzt, wiedergeben, wobei jeweils die übrige oberflächlich strukturierte Fläche der Dekorflächen (2, 2') von einem oder mehreren ersten oberflächlich strukturierten Flächenelement(en) (5a) gebildet ist.

2. Fahrzeugreifen nach Anspruch 1, **dadurch gekennzeichnet, dass** die ersten und die zweiten oberflächlich strukturierten Flächenelemente (5a, 5b) innerhalb eines sich über einen Umfangsabschnitt der Seitenwand (1) erstreckenden Seitenwanddekors den gleichen Typ Oberflächenstruktur aufweisen.

3. Fahrzeugreifen nach Anspruch 1 oder 2, **dadurch gekennzeichnet, dass** die Oberflächenstruktur der ersten und der zweiten Flächenelemente (5a, 5b) eine Oberflächenrauheit ist.

4. Fahrzeugreifen nach Anspruch 1 oder 2, **dadurch gekennzeichnet, dass** die Oberflächenstruktur der ersten und der zweiten Flächenelemente (5a, 5b) von einer Vielzahl punktueller dreidimensionaler Elemente gebildet ist.

5. Fahrzeugreifen nach Anspruch 1 oder 2, **dadurch gekennzeichnet, dass** die Oberflächenstruktur der ersten und der zweiten Flächenelemente (5a, 5b) von Schraffurflächen aus einer Vielzahl von insbesondere parallel zueinander verlaufenden Erhebungen (3a, 3b) gebildet ist.

6. Fahrzeugreifen nach einem der Ansprüche 1, 2 oder 5, **dadurch gekennzeichnet, dass** die Erhebungen (3a, 3b) im Querschnitt im Wesentlichen dreieckig oder trapezförmig sind.

7. Fahrzeugreifen nach Anspruch 5 oder 6, **dadurch gekennzeichnet, dass** sich die Erhebungen (3b) in den zweiten Flächenelementen (5b) von den Erhebungen (3a) in den ersten Flächenelementen (5a) durch zumindest eines der nachfolgenden Merkmale unterscheidet:
- die Höhe (h₂) der Erhebungen (3b) in den zweiten Flächenelementen (5b) ist größer als jene der Erhebungen (3a) in den ersten Flächenelementen (5a),
- die Dichte der Erhebungen (3b) in den zweiten Flächenelementen (5b) ist größer als jene der Erhebungen (3a) in den ersten Flächenelementen (5a),
- die Erhebungen (3b) in den zweiten Flächenelementen (5b) weisen Seitenflanken (7) auf, die zu einer Senkrechten auf die Seitenwand (1) unter einem kleineren Winkel (α₂) verlaufen als die Seitenflanken (6) der Erhebungen (3a) in den ersten Flächenelementen (5a).

8. Fahrzeugreifen nach Anspruch 7, **dadurch gekennzeichnet, dass** der Winkel (α₂) der Seitenflanken (7) der Erhebungen (3b) in den zweiten Flächenelementen (5b) relativ zur Senkrechten auf die Seitenwand (1) um mindestens 10° kleiner ist als der Winkel (α₁) der Seitenflanken (6) der Erhebungen (3a) in den ersten Flächenelementen (5a).

9. Fahrzeugreifen nach Anspruch 7, **dadurch gekennzeichnet, dass** der Winkel (α₂) der Seitenflanken (7) der Erhebungen (3b) relativ zur Senkrechten auf die Seitenwand (1) in den zweiten Flächenelementen (5b) 15° bis 30° beträgt.

10. Fahrzeugreifen nach Anspruch 7 oder 8, **dadurch gekennzeichnet, dass** der Winkel (α₁) der Seitenflanken (6) der Erhebungen (3a) relativ zur Senkrechten auf die Seitenwand (1) in den ersten Flächenelementen (5a) 35° bis 50°beträgt.

11. Fahrzeugreifen nach einem der Ansprüche 5 bis 10, **dadurch gekennzeichnet, dass** die Höhe (h₂) der Erhebungen (3b) in den zweiten Flächenelementen (5b) um mindestens 0,1 mm größer ist als die Höhe (h₁) der Erhebungen (3a) in den ersten Flächenelementen (5a).

12. Fahrzeugreifen nach einem der Ansprüche 5 bis 11, **dadurch gekennzeichnet, dass** die Erhebungen (3b) in den zweiten Flächenelementen (5b) an ihrer Basis entweder unmittelbar aneinander anschließen oder einen gegenseitigen Abstand (a₂) von bis zu 0,3 mm aufweisen.

13. Fahrzeugreifen nach einem der Ansprüche 5 bis 11, **dadurch gekennzeichnet, dass** die Erhebungen (3a) in den ersten Flächenelementen (5a) an ihrer Basis entweder unmittelbar aneinander anschließen oder einen gegenseitigen Abstand (a₁) von bis zu 0,5 mm aufweisen.

14. Fahrzeugreifen nach einem der Ansprüche 5 bis 13, **dadurch gekennzeichnet, dass** die Erhebungen (3b) in den zweiten Flächenelementen (5b) eine Höhe (h₂) von maximal 0,8 mm aufweisen.

15. Fahrzeugreifen nach einem der Ansprüche 5 bis 13, **dadurch gekennzeichnet, dass** die Erhebungen (3a) in den ersten Flächenelementen (5a) eine Höhe (h₁) von 0,15 mm bis 0,6 mm aufweisen.

16. Fahrzeugreifen nach einem der Ansprüche 5 bis 15, **dadurch gekennzeichnet, dass** innerhalb einer Dekorfläche (2, 2') der Winkel (β) zwischen den Erhebungen (3a) in den ersten Flächenelementen (5a) und den Erhebungen (3b) in den zweiten Flächenelementen (5b) 45° bis 135°, insbesondere etwa 90°, beträgt.

## Claims

1. Vehicle tyre having a sidewall (1) with at least one sidewall decoration which extends at least over a circumferential section of the sidewall (1), wherein the sidewall decoration has decoration areas (2, 2') composed of first and second superficially structured area elements (5a, 5b), wherein the first superficially structured area elements (5a) absorb less light than the second superficially structured area elements (5b),
**characterized**
**in that** the sidewall decoration is formed from the decoration areas (2, 2') and a lattice-like pattern of smooth area elements (10, 10a) which encircle or delimit the decoration areas (2, 2'),
wherein the second superficially structured area elements (5b) of the decoration areas (2, 2') at least partially replicate a shadow or a copy of the lattice-like pattern or of a part of the lattice-like pattern, slightly offset in a circumferential direction and in a radial direction in relation to the pattern, wherein in each case the remaining superficially structured area of the decoration areas (2, 2') is formed by one or more first superficially structured area element(s) (5a).

2. Vehicle tyre according to Claim 1, **characterized in that** the first and the second superficially structured area elements (5a, 5b) have the same type of surface structure within one sidewall decoration extending over a circumferential section of the sidewall (1).

3. Vehicle tyre according to Claim 1 or 2, **characterized in that** the surface structure of the first and of the second area elements (5a, 5b) is a surface roughness.

4. Vehicle tyre according to Claim 1 or 2, **characterized in that** the surface structure of the first and of the second area elements (5a, 5b) is formed by a multiplicity of punctiform three-dimensional elements.

5. Vehicle tyre according to Claim 1 or 2, **characterized in that** the surface structure of the first and the second area elements (5a, 5b) is formed by hatching areas composed of a multiplicity of elevations (3a, 3b) running in particular parallel to one another.

6. Vehicle tyre according to any of Claims 1, 2 and 5, **characterized in that** the elevations (3a, 3b) are, in cross section, substantially triangular or trapezoidal.

7. Vehicle tyre according to Claim 5 or 6, **characterized in that** the elevations (3b) in the second area elements (5b) differ from the elevations (3a) in the first area elements (5a) by at least one of the following features:
- the height (h₂) of the elevations (3b) in the second area elements (5b) is greater than that of the elevations (3a) in the first area elements (5a),
- the density of the elevations (3b) in the second area elements (5b) is greater than that of the elevations (3a) in the first area elements (5a),
- the elevations (3b) in the second area elements (5b) have side flanks (7) which run at a smaller angle (α₂) with respect to a perpendicular to the sidewall (1) than the side flanks (6) of the elevations (3a) in the first area elements (5a) .

8. Vehicle tyre according to Claim 7, **characterized in that** the angle (α₂) of the side flanks (7) of the elevations (3b) in the second area elements (5b) relative to the perpendicular to the sidewall (1) is smaller by at least 10° than the angle (α₁) of the side flanks (6) of the elevations (3a) in the first area elements (5a).

9. Vehicle tyre according to Claim 7, **characterized in that** the angle (α₂) of the side flanks (7) of the elevations (3b) relative to the perpendicular to the sidewall (1) in the second area elements (5b) is 15° to 30°.

10. Vehicle tyre according to Claim 7 or 8, **characterized in that** the angle (α₁) of the side flanks (6) of the elevations (3a) relative to the perpendicular to the sidewall (1) in the first area elements (5a) is 35° to 50°.

11. Vehicle tyre according to any of Claims 5 to 10, **characterized in that** the height (h₂) of the elevations (3b) in the second area elements (5b) is greater by at least 0.1 mm than the height (h₁) of the elevations (3a) in the first area elements (5a).

12. Vehicle tyre according to any of Claims 5 to 11, **characterized in that** the elevations (3b) in the second area elements (5b), at their base, either directly adjoin one another or have a spacing (a₂) to one another of up to 0.3 mm.

13. Vehicle tyre according to any of Claims 5 to 11, **characterized in that** the elevations (3a) in the first area elements (5a), at their base, either directly adjoin one another or have a spacing (a₁) to one another of up to 0.5 mm.

14. Vehicle tyre according to any of Claims 5 to 13, **characterized in that** the elevations (3b) in the second area elements (5b) have a height (h₂) of at most 0.8 mm.

15. Vehicle tyre according to any of Claims 5 to 13, **characterized in that** the elevations (3a) in the first area elements (5a) have a height (h₁) of at 0.15 mm to 0.6 mm.

16. Vehicle tyre according to any of Claims 5 to 15, **characterized in that**, within one decoration area (2, 2'), the angle (β) between the elevations (3a) in the first area elements (5a) and the elevations (3b) in the second area elements (5b) is 45° to 135°, in particular approximately 90°.

## Revendications

1. Bandage pour roue de véhicule, présentant une paroi latérale (1) dotée d'un décor de paroi latérale qui s'étend sur au moins une partie de la périphérie de la paroi latérale (1),
le décor de paroi latérale présentant des surfaces décoratives (2, 2') constituées de premiers et de deuxièmes éléments de surface (5a, 5b) à surface structurée, les premiers éléments de surface (5a) à surface structurée absorbant moins la lumière que les deuxièmes éléments de surface (5b) à surface structurée, **caractérisé en ce que**
le décor de paroi latérale est formé des surfaces décoratives (2, 2') et d'un motif réticulé formé d'éléments de surface lisses (10, 10a) qui entourent ou délimitent les surfaces décoratives (2, 2'),
**en ce que** les deuxièmes éléments de surface (5b) à surface structurée des surfaces décoratives (2, 2') reproduisent au moins essentiellement une ombre ou une copie du motif réticulé ou d'une partie du motif réticulé en léger décalage par rapport au motif dans la direction périphérique ou dans la direction radiale et
**en ce que** le reste de la surface structurée de chacune des surfaces décoratives (2, 2') est formé d'un ou plusieurs deuxièmes éléments de surface (5a) à surface structurée.

2. Bandage pour roue de véhicule selon la revendication 1, **caractérisé en ce que** les premiers et les deuxièmes éléments de surface (5a, 5b) à surface structurée présentent le même type de structure de surface à l'intérieur d'un décor de paroi latérale qui s'étend sur une partie de la périphérie du décor de paroi latérale.

3. Bandage pour roue de véhicule selon les revendications 1 ou 2, **caractérisé en ce que** la structure de surface des premiers et des deuxièmes éléments de surface (5a, 5b) urée est une rugosité de surface.

4. Bandage pour roue de véhicule selon les revendications 1 ou 2, **caractérisé en ce que** la structure de surface des premiers et des deuxièmes éléments de surface (5a, 5b) est formée de plusieurs éléments ponctuels tridimensionnels.

5. Bandage pour roue de véhicule selon les revendications 1 ou 2, **caractérisé en ce que** la structure de surface des premiers et des deuxièmes éléments de surface (5a, 5b) est formée de surfaces de trame hachurée constituée de plusieurs rehaussements (3a, 3b) qui s'étendent en particulier parallèlement les uns par rapport aux autres.

6. Bandage pour roue de véhicule selon l'une des revendications 1, 2 ou 5, **caractérisé en ce que** les rehaussements (3a, 3b) sont essentiellement triangulaires ou trapézoïdaux en coupe transversale.

7. Bandage pour roue de véhicule selon les revendications 5 ou 6, **caractérisé en ce que** les rehaussements (3a) formés dans les deuxièmes éléments de surface (5b) se distinguent des rehaussements (3b) formés dans les premiers éléments de surface (5a) par une ou plusieurs des caractéristiques suivantes :
- la hauteur (h₂) des rehaussements (3b) formés dans les deuxièmes éléments de surface (5b) est supérieure à celle des rehaussements (3a) formés dans les premiers éléments de surface (5a),
- la densité des rehaussements (3b) formés dans les deuxièmes éléments de surface (5b) est supérieure à celle des rehaussements (3a) formés dans les deuxièmes éléments de surface (5b),
- les rehaussements (3b) formés dans les deuxièmes éléments de surface (5b) présentent des flancs latéraux (7) qui forment avec une normale à la paroi latérale (1) un angle (α₂) plus petit que celui des flancs latéraux (6) des rehaussements (3a) formés dans les premiers éléments de surface (5a).

8. Bandage pour roue de véhicule selon la revendication 7, **caractérisé en ce que** l'angle (α₂) formé par rapport à la normale à la paroi latérale (1) par les flancs latéraux (7) des rehaussements (3b) formés dans les deuxièmes éléments de surface (5b) est inférieur d'au moins 10° à l'angle (α₁) des flancs latéraux (6) des rehaussements (3a) formés dans les premiers éléments de surface (5a).

9. Bandage pour roue de véhicule selon la revendication 7, **caractérisé en ce que** l'angle (α₂) formé par rapport à la normale à la paroi latérale (1) par les flancs latéraux (7) des rehaussements (3b) formés dans les deuxièmes éléments de surface (5b) est compris entre 15° et 30°.

10. Bandage pour roue de véhicule selon les revendications 7 ou 8, **caractérisé en ce que** l'angle (α₁) formé par rapport à la normale à la paroi latérale (1) par les flancs latéraux (6) des rehaussements (3a) formés dans les premiers éléments de surface (5a) est compris entre 35° et 50°.

11. Bandage pour roue de véhicule selon l'une des revendications 5 à 10, **caractérisé en ce que** la hauteur (h₂) des rehaussements (3b) formés dans les deuxièmes éléments de surface (5b) est d'au moins 0,1 mm supérieure à la hauteur (h₁) des rehaussements (3a) formés dans les premiers éléments de surface (5a).

12. Bandage pour roue de véhicule selon l'une des revendications 5 à 11, **caractérisé en ce que** les rehaussements (3b) formés dans les deuxièmes éléments de surface (5b) se raccordent directement les uns aux autres par leur base ou présentent entre eux un écart mutuel (α₂) pouvant atteindre 0,3 mm.

13. Bandage pour roue de véhicule selon l'une des revendications 5 à 11, **caractérisé en ce que** les rehaussements (3a) formés dans les premiers éléments de surface (5a) se raccordent directement les uns aux autres par leur base ou présentent entre eux un écart mutuel (a₁) pouvant atteindre 0,3 mm.

14. Bandage pour roue de véhicule selon l'une des revendications 5 à 13, **caractérisé en ce que** les rehaussements (3b) formés dans les deuxièmes éléments de surface (5b) présentent une hauteur (h₂) d'au plus 0,8 mm.

15. Bandage pour roue de véhicule selon l'une des revendications 5 à 13, **caractérisé en ce que** les rehaussements (3a) formés dans les premiers éléments de surface (5a) présentent une hauteur (h₁) comprise entre 0, 15 mm et 0,6 mm.

16. Bandage pour roue de véhicule selon l'une des revendications 5 à 15, **caractérisé en ce qu'**à l'intérieur d'une surfaces décoratives (2, 2'), l'angle (β) entre les rehaussements (3a) formés dans les premiers éléments de surface (5a) et les rehaussements (3b) formés dans les deuxièmes éléments de surface (5b) est compris entre 45° et 135° et vaut en particulier environ 90°.
